# EUROPEAN PATENT SPECIFICATION

(11) **EP 1 971 737 B1**
(45) Date of publication and mention of the grant of the patent: **27.04.2011**
(21) Application number: 07700080.0
(22) Date of filing: 15.01.2007
(51) Int. Cl.: E04F 17/12, E04F 17/10

(54) **REFUSE CHUTE**
MÜLLSCHLUCKER
GOULOTTE D ÉVACUATION

(30) Priority: 13.01.2006 AU 2006900158
(43) Date of publication of application: 24.09.2008
(73) Proprietor: PRESTON, John Clement, Silverwater, NSW 2128 (AU)
(72) Inventor: PRESTON, John Clement, Silverwater, NSW 2128 (AU)
(74) Representative: Viering, Jentschura & Partner
(86) International application number: PCT/AU2007/000028
(87) International publication number: WO 2007/079544

(56) References cited:
- EP-A1- 0 372 396
- DE-A1- 1 531 881
- DE-B- 1 083 769
- FR-A1- 2 662 198
- GB-A- 1 071 949
- GB-A- 2 229 427
- US-A- 1 462 126
- US-A1- 2005 155 837

## Description

### FIELD OF THE INVENTION

The present invention relates to a refuse chute for gravity disposal of refuse from storeys of a multi-storey building such as during building construction or refurbishment.

### BACKGROUND OF THE INVENTION

It is normal practice on multi-storey building sites to provide for the removal of refuse from upper floors of a building by a refuse chute which defines a shaft whereby all types of building refuse may be dropped from the upper floors down the chute shaft to a container located at the bottom of the chute, eg at ground level.

Such chutes are usually assembled from individual tubular sections of circular or quadrilateral cross-section which are stackable to provide a height suitable to the specific building. The individual sections which, when in place, extend vertically along the building have one or more refuse inlet structures that enable a user to put refuse into the chute for gravity disposal. As such, conventional refuse chutes have many adjustable components to fit different floor heights in buildings, resulting in many pieces to be assembled. Also, there are a number of different refuse inlet structures, ranging from a simple opening or holes in a side wall of the chute sections, which may be covered by a flexible sheet material, to elaborate tilting chute assemblies.

UK Patent document GB 2,229,427 A shows a refuse chute that comprises a number of chute sections that join together end-to-end to provide the height of refuse chute required. Chute sections that are at the height of a floor of the building that will require removal of refuse have a refuse entry point provided. The refuse entry point is a sloped tubular structure attached to, and extending externally from, the chute section. Such entry point is at a fixed location on the chute section, so the refuse may need lifting or lowering to put it into the refuse entry point; this may prove to be an occupational health and safety hazard.

US Patent 3,627,090 discloses a refuse chute for a building comprising a number of sheet metal chute sections. Again, the chute sections that are at floor level are provided with an external refuse entry point. The refuse entry point is provided by an external funnel configuration with a bottom and side walls that extend outwardly from the chute sections into the building. The bottom portion of the funnel rests on the floor(s) of the building and provides support to the chute sections. The chute sections between the floor level chute sections are capable of telescoping so that the floor level chute sections can be adjusted to allow for the refuse entry point to be at floor level. The opening of the entry point may be covered by a flexible rubber flap.

UK Patent document GB 1,071,949 A describes a refuse chute fitted inside a multi-storey building for residents of the building to dispose of their refuse. The chute is made from pre-cast concrete tubular walls and has an inlet opening into which the refuse can be thrown. The inlet extends outwardly from the concrete shaft and has outer walls of concrete and a door which swings to allow sluiced passage of the refuse into the chute. There is one inlet per floor.

US Patent 3,709,345 describes a double passage silo chute which has a separate passage for service of the silo and discharge from the silo; the service passage being between the silo and the discharge passage. The separation of the service and discharge passages is achieved by a vertical wall. Within this vertical wall normally closed access doors are provided. When it is desired to discharge some of the contents of the silo, the access doors are pivoted about hinges on the lower horizontal frame of the door to form a passage from the interior of the silo. The contents of the silo travel over the access door and down the discharge passage.

Australian Patent document AU 682758, in the name of the present applicant, provides a refuse chute system having multiple refuse inlet positions per chute section. The unwanted inlets can be covered with removable plates so that, apart from the inlet opening(s) that remain functional, a continuous chute is provided. The refuse inlet extends outwardly from the chute and has a flat section which rests on the building floor, and then slopes to the chute.

It is an object of the present invention to provide a simpler refuse chute of the type above described, that is, a chute that is comprised of a number of discrete chute sections that can be assembled to provide an enclosed refuse disposal shaft having a desired height, selected ones of the chute sections being provided with access openings in their peripheral wall through which refuse may be introduced into the chute shaft for it to fall down the chute, and which chute assembly reduces the risk of injury to users of the chute by objects falling down from higher up the chute shaft..

A particular object is the provision of a safety structure in such chutes that allows a user to push refuse into the chute shaft with reduced injury risk from objects falling from a level above the insertion point.

A further object is to provide a chute inlet structure which allows the actual opening into the chute shaft to remain unobstructed and yet still minimise objects falling down the chute from a level above the opening to exit the chute shaft through that opening.

### SUMMARY OF THE INVENTlON

In a broad form, the invention provides a simple refuse chute with an internal baffle system, for use inside or outside a building.

In one aspect, the present invention provides a refuse chute for a building assembled from a plurality of tubular (or duct-like) chute sections, the chute sections being stackable in an end-to-end or telescopic relation and securable to provide an enclosed refuse disposal shaft, at least some of the chute sections having one or more openings in a side wall of the chute section, characterised in that a baffle is associated with each one or more of the openings, the baffle extending from the side wall into the disposal shaft and being preferably inclined such that there is an obtuse angle between the baffle and the opening with which the baffle is associated.

The internal baffles provide protection from refuse falling from above, so that a user may safely put refuse in the chute at lower levels with minimal chance that refuse falling from above can harm them. It is desirable that the baffle length be equal to or longer than an average person's arm so as to protect the person and arm of the person from refuse falling from above.

Preferably, a chute section may have multiple openings along the height thereof, thereby providing different refuse insertion locations for disposal of refuse. So, for example, a person seeking to dispose of refuse does not have to bend over or lift it up to an opening location above floor level, and may instead use an inlet at a lower height along the chute section, eg one at floor level, thereby enabling refuse to be simply swept into the chute.

Preferably, the angle and the distance that the baffle extends into the disposal shaft are chosen such that the baffle provides an awning for the opening below the opening with which the baffle is associated. Even more preferably, the end of the baffle distal to the opening with which it is associated is on a horizontal plane and with upper or a lower edge of the opening below. Such a configuration assists in minimizing refuse put into the disposal shaft re-entering the building through a lower opening. It will be understood that whilst from a manufacturing point of view it is desirable to have all baffles inclined at the same angle, the angle of inclination of the individual baffles within a chute section or between chute sections need not be uniformly the same.

Preferably, the baffle is a plate that extends substantially across a width of the chute section. The plate may be secured to opposite side walls and at or near a lower edge of the opening with which it is associated. The baffle is held securely in such a manner, avoiding bouncing as the refuse travels down the baffle and into the disposal chute, thereby minimising damage to the baffle and providing a smoother path for the refuse falling into the disposal shaft.

Preferably, the plate has a ledge depending from the plate end distal to the opening. The ledge may be provided by a reinforcement bar. Such a ledge strengthens the baffle, minimising bending of the baffle if debris from above hits the free baffle edge on its descent.

In another embodiment, the baffle could be hinged at or near the edge of the opening and be held securely at discrete angles of inclination with respect to the vertical. By providing the option of varying the angle of inclination of the baffle, the user can select the angle of the baffle that best suits specific refuse disposal requirements. Alternatively, the plate may be welded fixed to the side walls.

The angle between the wall in which the opening is provided (or the plane in which the opening is defined) and the plane in which the baffle extends (ie assuming a planar or plate-like baffle) is preferably between 110 to 150 degrees, preferably at about 120 degrees.

The baffle may be removably secured to the chute sections, providing for ease in replacing damaged baffles.

It will be appreciated that whilst the baffle may be embodied by a simple planar plate, other structures may find use, for example a corrugated plate, trough-like plates etc.

An illustrative embodiment of the present invention will be described with reference to the accompanying figures. Further features and advantages of the invention will also become apparent from the description below.

### BRIEF DESCRIPTION OF THE DRAWINGS

Figure 1 is a schematic perspective view of a refuse chute in accordance with an embodiment of the invention, showing refuse being placed into the chute on three levels by different means and falling into a container at the bottom of the chute, with a cut away section to show the internal configuration of the refuse chute;
Figure 2 is a schematic, partial side elevation of the refuse chute of fig. 1, with four building levels shown;
Figure 3 shows a top elevation (3A), front elevation (3B), and side elevation (3C) of the refuse chute of Figure 1;
Figure 4 shows a front elevation of the refuse chute with varying covers for the refuse inlets;
Figure 5 shows a perspective view of a stackable chute section of the refuse chute of Figure 1, including a stacking facilitation portion and a securing device;
Figure 6 shows a schematic perspective view of a single chute section of a refuse chute as shown in Figure 1 in accordance with an embodiment of the invention; and
Figures 7A and B show a schematic of a side elevation and top elevation respectively of two chute sections of the type shown in Figure 6 joined together.

### DESCRIPTION OF PREFERRED EMBODIMENT

The present invention may be implemented in a variety of ways and the embodiments illustrated are to be considered only illustrative constructions.

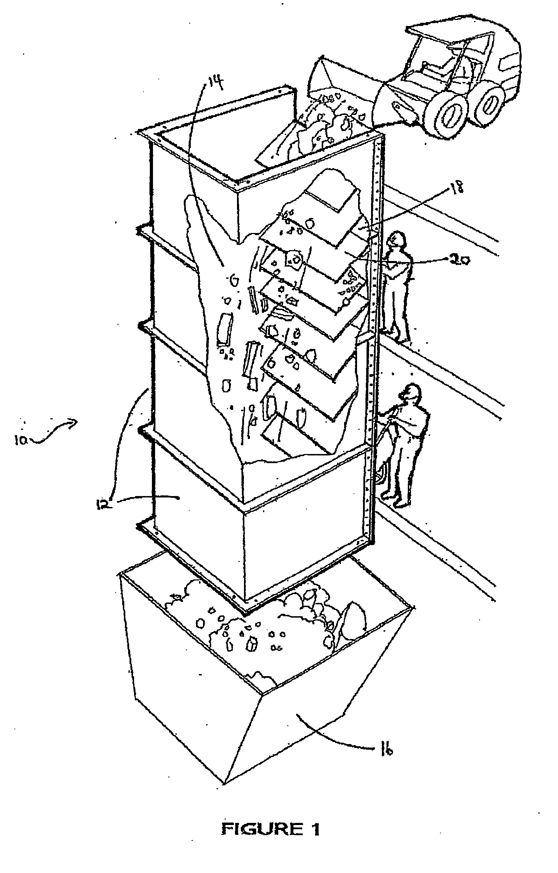

Figure 1 is a schematic perspective view of the refuse chute 10. Refuse chute 10 is assembled from four identical chute sections 12. The chute sections 12 may be identical and stacked and secured together at the end faces, as shown, or be of some other configuration such as a nesting arrangement in which the chute sections are joined together through their side walls, ie similar to telescopically inserted sections. The chute sections 12 can be stacked as high as needed for the particular application. Different types of chute sections are known from, for example, GB 2,229,427 A, US 3,627,090, and AU 682758, the contents of which are hereby incorporated by reference.

In this case, the chute sections 12 are of constant quadrilateral cross-section, made of steel sheets, and removably joined together at their end faces to form an enclosed disposal shaft 14, through which refuse falls by gravity to a container 16 below. Refuse is fed into the disposal shaft 14 through refuse inlets/openings 18.

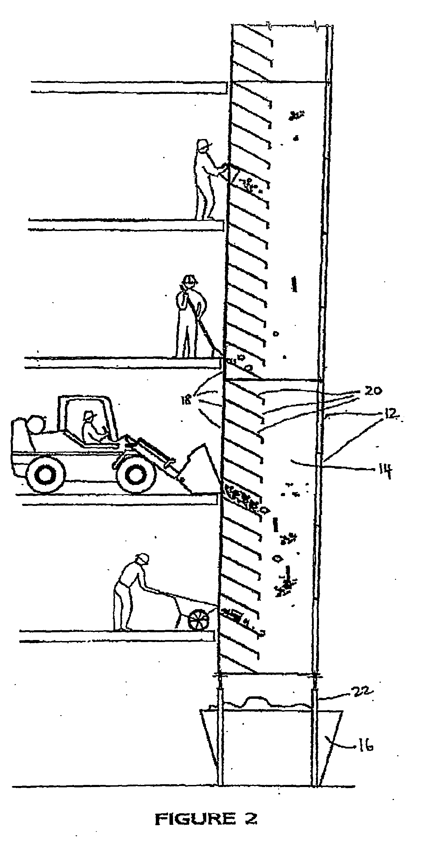

The concept underlying the invention may best be appreciated by reference to Figure 2. Each chute section 12 has multiple openings 18. These multiple openings 18 allow refuse to be fed into the refuse chute 10 at different heights on the same level; for example, by the tray of a bobcat or similar vehicle, by hand, wheelbarrow, or by sweeping the refuse into the shaft 14. It will be appreciated that dependent on the situation, only some of the chute sections 12 will have multiple openings 18, or even single openings.

Associated with each refuse inlet 18 is a baffle 20 extending into the disposal shaft, inclined at an angle to the height axis of chute sections 12 and in particular inclined at an obtuse angle relative to the refuse inlet 18 with which it is associated. Each baffle, which is preferably a planar sheet metal plate, is fixed to its associated refuse inlet 18 at or near the lower edge of that refuse inlet 18. The baffle 20 provides a slide such as to assist in gravity feeding the refuse into the disposal shaft 14, and further minimises the risk of refuse from higher levels harming a user placing refuse into the chute 10 at lower levels. The baffle 20 also provides a shelter or protection to the refuse inlet 18 below the opening with which the baffle 20 is associated. The incline and length of the baffle 20 shown is such that the end of the baffle 20 furthest from the refuse inlet 18 is on a horizontal plane with the upper edge of the refuse inlet 18 below the baffle (see line A). The baffles have a horizontal reinforcing lip 24 dependent from the end of each baffle 20 and extending the entire width thereof.

Each chute section 12 may have multiple baffles 20 (say four to six or more-baffles) which may have to be lifted into place by a lifting device due to its weight. However, smaller sections 12 having one or two baffles 20 can be manufactured and lifted by hand and secured in place manually.

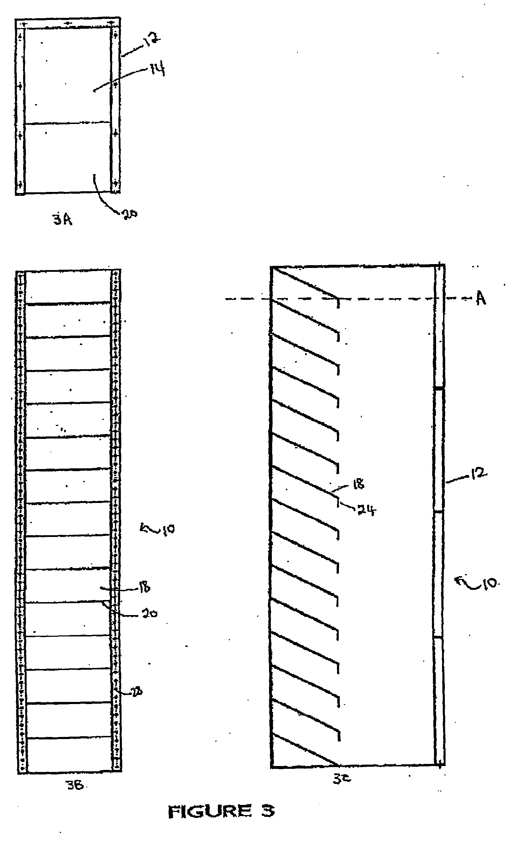

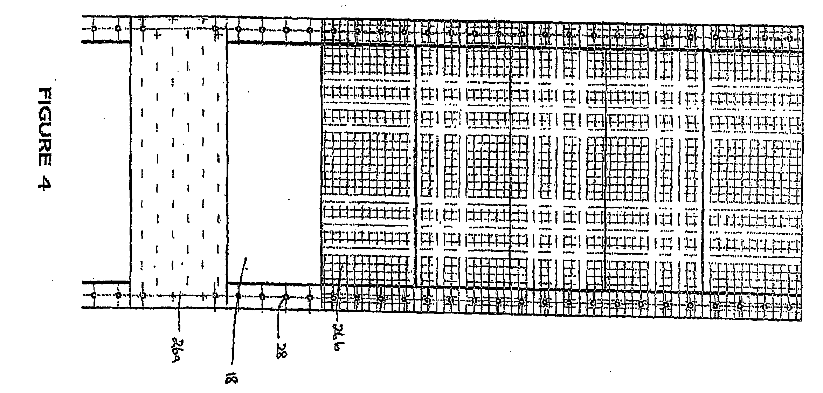

Also shown in Figure 2 is one example of struts 22 by which refuse chute 10 is held above the container 16. The refuse chute 10 is also able to be attached to the building or to the building site scaffolding or any other structure, as known to those in the art, keeping it securely in position using the securing or attachment points 28, shown in Figures 3 and 4.

Figure 3A shows the top view of the refuse chute 10 along a line A of Figure 3C (a simplified reproduction of the side elevation of the refuse chute 10 from Figure 2). The length of the baffles 20 in this embodiment is about 40% to 60% (or sufficient to cover from above the length of the arm of a person disposing refuse) into the chute 10 of the length of the chute sections 12, and as shown in Figure 3B they extend across the width of the chute sections 12.

The refuse inlets 18 can optionally be provided with a cover 26, as shown in Figure 4. The cover can be either a flap 26b through which refuse can still be placed such as a shade cloth type material or rubber, or a steel cover. 26a removably secured to the opening 18 to seal it temporarily from use.

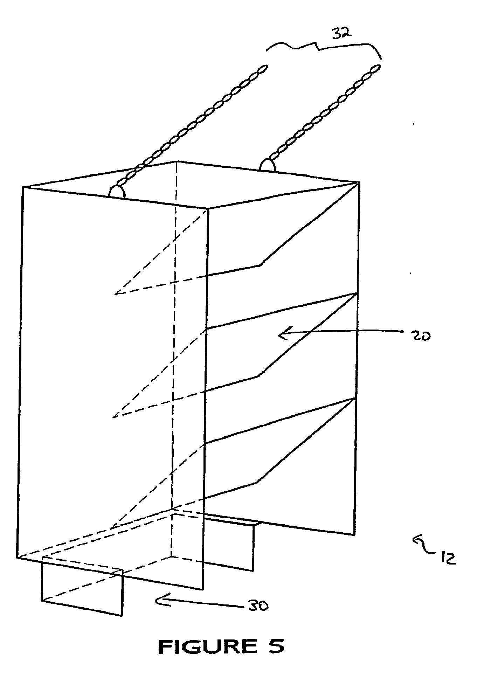

Figure 5 shows a possible configuration for an individual chute section 12 which stacks to form a refuse chute 10 in an end-to-end configuration. The body and baffle 20 configuration is the same as shown in previous figures. However, the chute section 12 includes a stacking facilitation portion 30 which is a three sided component placed inside the walls of the chute section 12 so as to fit in a nesting manner into the top of the chute section 12 below it. The stacking portion 30 has an open front corresponding to the side of the refuse chute 10 which has provided refuse inlets 18, extends along a portion of the side walls of the chute section 12, and along the wall distal and parallel to the wall which has the openings 18 provided. In the case of a refuse chute 10 of circular cross-section, the stacking portion 30 would be of an are-shape. The stacking facilitation portion 30 could also be provided in a refuse chute 10 in which the chute sections 12 are nested.

Further, a securing device 32, here shown as a chain, is provided on the top edge of the refuse chute section 12. This chain 32 may be attached to the scaffolding or other structure against which the refuse chute 10 is supported, or may link to immediately adjacent chute sections 12. The chain 32 can be used in addition, or as an alternative to, attachment points 28.

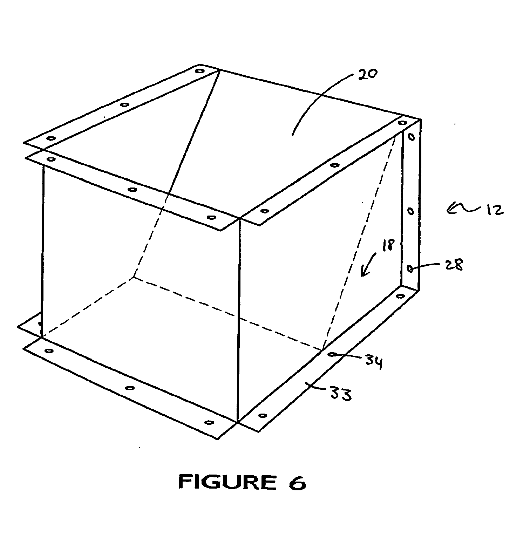

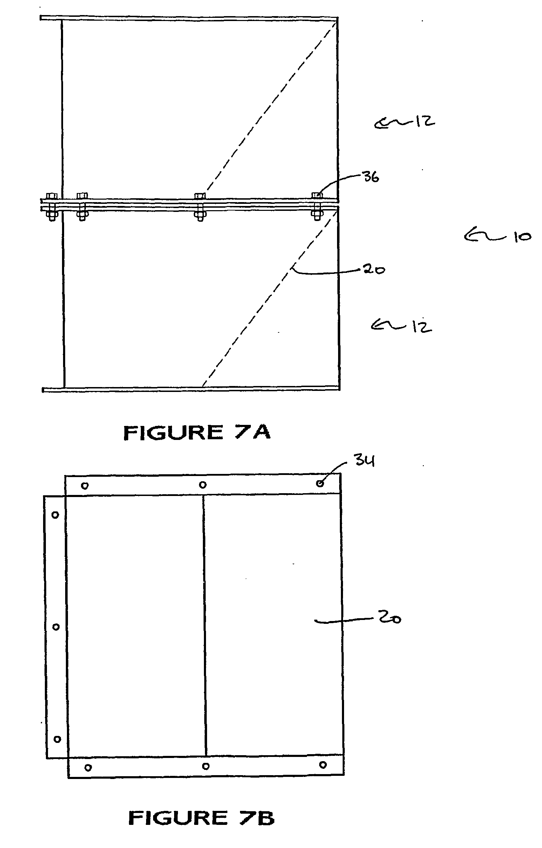

The most preferred configuration for the chute sections 12 and refuse chute 10 is shown in Figures 6 and 7, which show chute sections 12 which have a single baffle 20 associated with a single opening 18. The chute section 12 is of the type in which each chute section 12 is intended to be stacked in an end-to-end arrangement to form a refuse chute 10. The upper and lower edges of the chute section 12 have a lip 33 extending perpendicularly to the walls of the chute section 12 which correspond with similar lips on immediately adjacent chute sections 12. The adjacent chute sections 12 are secured together with any suitable means via attachment points 34 on the lip 33, but in the illustration of Figure 7, they are joined by bolts 36.

The present invention is not limited in application to the refuse chute configuration described. For example, the chute sections may be made out of any suitable material and different cross-sectional shapes may be used to make up the completed refuse chute depending on the needs of the application. Whilst sheet steel would most commonly be used, reinforced plastics materials or wooden constructions are not excluded from consideration, as are mixed-material solutions, eg the chute sections being manufactured from sheet metal, and the baffles from steel (or otherwise reinforced) plastics materials. Similarly, steel sheet baffles may be lined or otherwise coated/covered with abrasion-resistant and/or sound-absorbing materials such as to minimise noise impact upon refuse falling from above and hitting the baffle(s).

## Claims

1. A refuse chute (10) for a building assembled from a plurality of tubular chute sections (12), the chute sections (12) being stackable in an end-to-end or end-wise nesting relationship and securable to provide an enclosed refuse disposal shaft (14), at least some of the chute sections (12) having one or more openings (18) in a side wall of the chute section (12), **characterised in that** a baffle (20) each is associated with one or more of the openings (18), the baffle (20) extending from the side wall into the disposal shaft (14) and being inclined, preferably such that there is an obtuse angle between the baffle (20) and the opening (18) with which the baffle (20) is associated.

2. The refuse chute (10) according to claim 1, wherein the angle and the distance that the baffle (20) extends into the disposal shaft (14) are chosen such that the baffle (20) provides an awning for an opening below the opening with which the baffle (20) is associated.

3. The refuse chute (10) according to claim 2, wherein the end of the baffle (20) distal to the opening with which it is associated is on a near horizontal or horizontal plane with the lower edge of an opening below.

4. The refuse chute (10) according to claim 1, wherein the baffle (20) is a plate that extends substantially across a width of the chute section (12).

5. The refuse chute (10) according to claim 4, wherein the plate is secured to opposite side walls and at or near a lower edge of the opening with which it is associated.

6. The refuse chute (10) according to claim 4 or 5, wherein the plate has a ledge (24) depending from the plate end distal to the opening.

7. The refuse chute (10) according to claim 5 or 6, wherein the plate is welded to the side walls such that the angle is between 110 to 150 degrees, preferably about 120 degrees.

8. The refuse chute (10) according to claim 1, wherein the baffle (20) is hinged at or near the edge of the opening and securable at discrete angles of inclination with respect to the vertical, preferably in a range between 100 and 160 degrees.

9. The refuse chute (10) according to claim 1, wherein the baffle (20) is exchangeably secured to the chute section (12).

10. A tubular refuse chute section (12), adapted to be stacked with like chute sections in an end-to-end or end-wise nesting relationship to form a refuse chute (10) for a building, said refuse chute (10) having a disposal shaft (14), said refuse chute section (12) having one or more openings (18) in a side wall of said chute section (12), and a baffle (20) associated with one or more of the openings (18), said baffle (20) extending from the side wall into the disposal shaft (14) and being inclined, preferably such that there is an obtuse angle between the baffle (20) and the opening (18) with which the baffle (20) is associated.

11. The refuse chute section (12) according to claim 10, wherein the angle and the distance that the baffle (20) extends into the disposal shaft (14) are chosen such that the baffle (20) provides an awning for an opening below the opening with which the baffle (20) is associated.

12. The refuse chute section (12) according to claim 11, wherein the end of the baffle (20) distal to the opening with which it is associated is on a near horizontal or horizontal plane with the lower edge of an opening below.

13. The refuse chute section (12) according to claim 10, wherein the baffle (20) is a plate that extends substantially across a width of the chute section.

14. The refuse chute section (12) according to claim 13, wherein the plate is secured to opposite side walls and at or near a lower edge of the opening with which it is associated.

15. The refuse chute section (12) according to claim 13 or 14, wherein the plate has a ledge (24) depending from the plate end distal to the opening.

16. The refuse chute section (12) according to claim 14 or 15, wherein the plate is welded to the side walls such that the angle is between 110 to 150 degrees, preferably about 120 degrees.

17. The refuse chute section (12) according to claim 10, wherein the baffle (20) is hinged at or near the edge of the opening and securable at discrete angles of inclination with respect to the vertical, preferably in a range between 100 and 160 degrees.

18. The refuse chute section (12) according to claim 10, wherein the baffle (20) is exchangeably secured to the chute section (12).

## Patentansprüche

1. Abfallschacht (10) für ein Gebäude, aufgebaut aus einer Mehrzahl von rohrförmigen Schachtabschnitten (12), wobei die Schachtabschnitte (12) in einer Ende-an-Ende- oder Endeweise-Schachtelungsbeziehung stapelbar und sicherbar sind, um einen umschlossenen Abfallentsorgungsschacht (14) bereitzustellen, wobei wenigstens einige der Schachtabschnitte (12) eine oder mehrere Öffnungen (18) in einer Seitenwand des Schachtabschnitts (12) haben,
**dadurch gekennzeichnet, dass** eine Trennwand (20) jeweilig einer oder mehreren der Öffnungen (18) zugeordnet ist, wobei sich die Trennwand (20) von der Seitenwand aus in den Entsorgungsschacht (14) hinein erstreckt und geneigt ist, bevorzugt derart, dass dort ein stumpfer Winkel zwischen der Trennwand (20) und jener Öffnung (18) ist, welcher die Trennwand (20) zugeordnet ist.

2. Abfallschacht (10) gemäß Anspruch 1, wobei der Winkel und die Distanz, um die sich die Trennwand (20) in den Entsorgungsschacht (14) hinein erstreckt, derart gewählt sind, dass die Trennwand (20) ein Vordach bildet für eine Öffnung unter jener Öffnung, welcher die Trennwand (20) zugeordnet ist.

3. Abfallschacht (10) gemäß Anspruch 2, wobei das Ende der Trennwand (20) distale zu der dieser zugeordneten Öffnung in einer annähernd horizontalen oder horizontalen Ebene mit dem unteren Rand der darunterliegenden Öffnung ist.

4. Abfallschacht (10) gemäß Anspruch 1, wobei die Trennwand (20) eine Platte ist, die sich im Wesentlichen über die Weite des Schachtabschnitts (12) erstreckt.

5. Abfallschacht (10) gemäß Anspruch 4, wobei die Platte an einander gegenüberliegenden Seitenwänden und an oder nahe einem unteren Rand der Öffnung gesichert ist, welcher sie zugeordnet ist.

6. Abfallschacht (10) gemäß Anspruch 4 oder 5, wobei die Platte eine Vorsprungleiste (24) hat, die von dem Plattenende distal zu der Öffnung aus nach unten wegsteht.

7. Abfallschacht (10) gemäß Anspruch 5 oder 6, wobei die Platte an die Seitenwände geschweißt ist, so dass der Winkel zwischen 110 bis 150 Grad, bevorzugt 120 Grad, beträgt.

8. Abfallschacht (10) gemäß Anspruch 1, wobei die Trennwand (20) an oder nahe dem Rand der Öffnung gelenkig angebracht ist und in diskreten Neigungswinkeln bezüglich der Vertikalen sicherbar ist, bevorzugt in einem Bereich zwischen 100 und 160 Grad.

9. Abfallschacht (10) gemäß Anspruch 1, wobei die Trennwand (20) austauschbar am Schachtabschnitt (12) gesichert ist.

10. Rohrförmiger Abfallschachtabschnitt (12), eingerichtet um mit gleichen Schachtabschnitten gestapelt zu werden in einer Ende-an-Ende- oder Endeweise-Schachtelungsbeziehung, um einen Abfallschacht (10) für eine Gebäude zu bilden, wobei der Abfallschacht (12) einen Entsorgungsschacht (14) aufweist, wobei der Entsorgungsschaftabschnitt (12) eine oder mehrere Öffnungen (18) in einer Seitenwand des Schachtabschnitts (12) und eine Trennwand (20) hat, die einer oder mehreren der Öffnungen (18) zugeordnet ist, wobei sich die Trennwand (20) von der Seitenwand aus in den Entsorgungsschacht (14) hinein erstreckt und geneigt ist, bevorzugt derart, dass dort ein stumpfer Winkel zwischen der Trennwand (20) und jener Öffnung (18) ist, welcher die Trennwand (20) zugeordnet ist.

11. Abfallschachtabschnitt (12) gemäß Anspruch 10, wobei der Winkel und die Distanz, um die sich die Trennwand (20) in den Entsorgungsschacht (14) hinein erstreckt, derart gewählt sind, dass die Trennwand (20) ein Vordach bildet für eine Öffnung unter jener Öffnung, welcher die Trennwand (20) zugeordnet ist.

12. Abfallschachtabschnitt (12) gemäß Anspruch 11, wobei das Ende der Trennwand (20) distal zu der dieser zugeordneten Öffnung in einer annähernd horizontalen oder horizontalen Ebene mit dem unteren Rand der darunterliegenden Öffnung ist.

13. Abfallschachtabschnitt (12) gemäß Anspruch 10, wobei die Trennwand (20) eine Platte ist, die sich im Wesentlichen über die Weite des Schachtabschnitts (12) erstreckt.

14. Abfallschachtabschnitt (12) gemäß Anspruch 13, wobei die Platte an einander gegenüberliegenden Seitenwänden und an oder nahe einem unteren Rand der Öffnung gesichert ist, welcher sie zugeordnet ist.

15. Abfallschachtabschnitt (12) gemäß Anspruch 13 oder 14, wobei die Platte eine Vorsprungleiste (24) hat, die von dem Plattenende distal zu der Öffnung aus nach unten wegsteht.

16. Abfallschachtabschnitt (12) gemäß Anspruch 14 oder 15, wobei die Platte an die Seitenwände geschweißt ist, so dass der Winkel zwischen 110 bis 150 Grad, bevorzugt 120 Grad, beträgt.

17. Abfallschachtabschnitt (12) gemäß Anspruch 10, wobei die Trennwand (20) an oder nahe dem Rand der Öffnung gelenkig angebracht ist und in diskreten Neigungswinkeln bezüglich der Vertikalen sicherbar ist, bevorzugt in einem Bereich zwischen 100 und 160 Grad.

18. Abfallschachtabschnitt (12) gemäß Anspruch 10, wobei die Trennwand (20) austauschbar am Schachtabschnitt (12) gesichert ist.

## Revendications

1. Colonne vide-ordures (10) pour un bâtiment, assemblée à partir d'une pluralité de sections de colonne tubulaires (12), les sections de colonne (12) étant empilables selon une relation d'emboîtement bout à bout ou longitudinal et pouvant être fixées pour fournir un arbre de rebut de déchet enfermé (14), au moins certaines des sections (12) ayant une ou plusieurs ouvertures (18) dans une paroi latérale de la section de colonne (12),
**caractérisée en ce qu'**un déflecteur (20) est associé à une ou plusieurs des ouvertures (18), le déflecteur (20) s'étendant à partir de la paroi latérale dans l'arbre de rebut (14) et étant incliné de préférence de sorte qu'il y a un angle obtus entre le déflecteur (20) et l'ouverture (18) avec laquelle le déflecteur (20) est associé.

2. Colonne vide-ordures (10) selon la revendication 1, dans laquelle l'angle et la distance sur lesquels le déflecteur (20) s'étend dans l'arbre de rebut (14) sont choisis de sorte que le déflecteur (20) fournit un auvent pour une ouverture située au-dessous de l'ouverture à laquelle le déflecteur (20) est associé.

3. Colonne vide-ordures (10) selon la revendication 2, dans laquelle l'extrémité du déflecteur (20) distale par rapport à l'ouverture à laquelle elle est associée, est sur un plan presque horizontal ou horizontal avec le bord inférieur d'une ouverture au-dessous.

4. Colonne vide-ordures (10) selon la revendication 1, dans laquelle le déflecteur (20) est une plaque qui s'étend sensiblement sur une largeur de la section de colonne (12).

5. Colonne vide-ordures (10) selon la revendication 4, dans laquelle la plaque est fixée aux parois latérales opposées et au niveau de, ou à proximité d'un bord inférieur de l'ouverture à laquelle elle est associée.

6. Colonne vide-ordures (10) selon la revendication 4 ou 5, dans laquelle la plaque a un rebord (24) dépendant de l'extrémité de plaque distale par rapport à l'ouverture.

7. Colonne vide-ordures (10) selon la revendication 5 ou 6, dans laquelle la plaque est soudée sur les parois latérales de sorte que l'angle est compris entre 110 et 150 degrés, de préférence environ 120 degrés.

8. Colonne vide-ordures (10) selon la revendication 1, dans laquelle le déflecteur (20) est articulé au niveau de, ou à proximité du bord de l'ouverture et peut être fixé à des angles d'inclinaison différents par rapport à la verticale, de préférence dans une plage comprise entre 100 et 160 degrés.

9. Colonne vide-ordures (10) selon la revendication 1, dans laquelle le déflecteur (20) est fixé de manière échangeable à la section de colonne (12).

10. Section de colonne vide-ordures tubulaire (12) adaptée pour être empilée avec des sections de colonne similaires selon une relation d'emboîtement bout à bout ou longitudinal afin de former une colonne vide-ordures (10) pour un bâtiment, ladite colonne vide-ordures (10) ayant un arbre de rebut (14), ladite section de colonne vide-ordures (12) ayant une ou plusieurs ouvertures (18) dans une paroi latérale de ladite section de colonne (12) et un déflecteur (20) associé avec une ou plusieurs des ouvertures (18), ledit déflecteur (20) s'étendant à partir de la paroi latérale dans l'arbre de rebut (14) et étant incliné, de préférence de sorte qu'il existe un angle obtus entre le déflecteur (20) et l'ouverture (18) à laquelle le déflecteur (20) est associé.

11. Section de colonne vide-ordures (12) selon la revendication 10, dans laquelle l'angle et la distance sur lesquels le déflecteur (20) s'étend dans l'arbre de rebut (14) sont choisis de sorte que le déflecteur (20) fournit un auvent pour une ouverture au-dessous de l'ouverture à laquelle le déflecteur (20) est associé.

12. Section de colonne vide-ordures (12) selon la revendication 11, dans laquelle l'extrémité du déflecteur (20) distale par rapport à l'ouverture à laquelle elle est associée est sur un plan presque horizontal ou horizontal avec le bord inférieur d'une ouverture opposée.

13. Section de colonne vide-ordures (12) selon la revendication 10, dans laquelle le déflecteur (20) est une plaque qui s'étend sensiblement sur une largeur de la section de colonne.

14. Section de colonne vide-ordures (12) selon la revendication 13, dans laquelle la plaque est fixée sur les parois latérales opposées et au niveau de, ou à proximité d'un bord inférieur de l'ouverture à laquelle elle est associée.

15. Section de colonne vide-ordures (12) selon la revendication 13 ou 14, dans laquelle la plaque a un rebord (24) dépendant de l'extrémité de plaque distale par rapport à l'ouverture.

16. Section de colonne vide-ordures (12) selon la revendication 14 ou 15, dans laquelle la plaque est soudée aux parois latérales de sorte que l'angle est compris entre 110 et 150 degrés, de préférence environ 120 degrés.

17. Section de colonne vide-ordures (12) selon la revendication 10, dans laquelle le déflecteur (20) est articulé au niveau de ou à proximité du bord de l'ouverture et peut être fixé à des angles d'inclinaison différents par rapport à la verticale, de préférence sur une plage comprise entre 100 et 160 degrés.

18. Section de colonne vide-ordures (12) selon la revendication 10, dans laquelle le déflecteur (20) est fixé de manière échangeable à la section de colonne (12).
